# DEMANDE DE BREVET EUROPEEN

(11) **EP 0 933 249 A1**
(43) Date de publication de la demande: **04.08.1999**
(21) Numéro de dépôt: 99400188.1
(22) Date de dépôt: 27.01.1999
(51) Int. Cl.: B60N 3/00, B60N 2/44, B60N 2/22, F16C 25/04, F16C 11/02

(54) **Dispositif d'articulation démontable, structure de siège, siège et véhicule équipé de ce dispositif**

(30) Priorité: 30.01.1998 FR 9801075
(71) Demandeur: SOCIETE INDUSTRIELLE ET COMMERCIALE DE MATERIEL AERONAUTIQUE (SICMA) SOCIETE ANONYME, F-36100 Issoudun (FR)
(72) Inventeur: Marechal, Robert, 75116 Paris (FR)
(74) Mandataire: Derambure, Christian

(57) **Abrégé**

L'invention concerne notamment un dispositif (1) d'articulation destiné à une structure de siège (2) de véhicule (4) pour le transport aérien.

Ce dispositif (1) comporte au moins une douille (26) transversale, essentiellement étendue sensiblement suivant l'axe de rotation (5), avec transversalement: d'une part des moyens de maintien (37) de la structure de dossier (8); et d'autre part une tête (28) saillante destinée à être logée dans un organe complémentaire (29) de la structure fixe (7) sensiblement suivant une direction d'élévation (Z).

## Description

L'invention vise un dispositif d'articulation pour siège de véhicule, ainsi qu'une structure de siège, un siège et un véhicule notamment un aéronef, équipés d'un tel dispositif d'articulation.

Le domaine technique général de l'invention est donc l'aménagement des véhicules pour passagers, et plus spécialement celui des sièges à dossier réglables de véhicules aériens de transport en commun.

Le dispositif d'articulation évoqué ici est intégré à la structure du siège et destiné à permettre :
- les basculements d'inclinaison/relèvement d'un dossier du siège par rapport à son assise ;
- le montage/démontage du dossier par rapport au reste de la structure de siège ;
- les pivotements de mise en service/escamotage d'une tablette, aussi appelée plateau de service, à l'arrière du dossier, le cas échéant;
- le montage/démontage aisé de cette tablette ; et
- d'éviter toute situation gênante liée au basculement du dossier lorsque la tablette est en position de service.

Diverses techniques sont connues dans ce domaine.

Le document US-A-2.016.133 décrit un siège de véhicule terrestre, dont le dossier est ajustable en inclinaison suivant différents angles. Une commande est montée dans l'accoudoir, pour ajuster l'angle du dossier.

Le document US-A-3.588.172 décrit un siège réglable avec un plateau monté sur la partie supérieure du dossier de siège par deux pivots inamovibles. Cette partie est inclinée en avant lorsque le dossier est en position redressée, ou alignée avec le bas du dossier en position inclinée.

Le document NL-A-74.100.25 décrit une articulation pour le pivotement d'un plateau de service avec un palier en plastique fixé à l'arrière du dossier d'un siège. Une pièce d'articulation rectangulaire est pourvue de plots, pour coopérer avec des sections de rebord et de languette du plateau. Le rebord pivotant a deux proéminences et un chanfrein coaxial à un moyeu horizontal.

Une proéminence fait office de butée et l'autre, en forme de oméga creux, sert d'accrochage élastique.

Le document US-A-4.364.604 décrit un siège d'aéronef avec une paire de pivots, une paire de pattes de montage à ouvertures, et une paire de cadres latéraux. Chacun de ces derniers comprend un bossage avec une surface d'accrochage et une ouverture de logement d'un plot. Un plateau, démontable indépendamment du dossier et inversement, est pourvu de pattes d'accrochage en fourches et pivote autour de l'axe du dossier.

Le document US-A-4.431.231 décrit aussi un siège d'aéronef inclinable, à plateau ou tablette repliable. Des moyens de blocage sont prévus pour empêcher le pivotement du dossier vers une position inclinée, lorsque la tablette est en position d'utilisation.

Le document EP-A-0.112.170 décrit un siège de véhicule, avec un plateau à démontage rapide sans outil. Des pions de pivotement sont logés dans des ouvertures des pattes du plateau, qui peuvent être fléchies l'une vers l'autre pour le démontage. Un tube de torsion prévu sur une patte, comprend un plot sollicité par un ressort, et une fente de connexion. Des moyens de blocage sont prévus pour immobiliser le dossier, quand la tablette est en position d'utilisation.

Le document EP-A-0.385.861 décrit un siège convertible à tablette escamotable.

Le document EP-A-0.628.447 décrit un dispositif d'articulation pour siège d'avion, destiné à permettre le basculement de son dossier. Un tourillon associé rigidement au dossier saille à l'extérieur suivant l'axe de basculement. Des moyens associent le tourillon de façon amovible et sécurisée sur une partie substantielle de segment d'axe, en vue de la rotation. Le tourillon, son support et leurs moyens d'association illustrés sont une pièce monobloc.

Les techniques connues présentent des inconvénients.

Dans le cas d'un dispositif d'articulation avec de multiples pièces, les temps d'assemblage du dispositif, et souvent de montage et démontage sont longs.

Notamment, les dispositifs utilisés actuellement nécessitent une étape peu pratique d'assemblage suivant la direction transversale, d'un axe de guidage du dossier, dans un logement fixe par rapport au piétement, de part et d'autre de l'axe de rotation.

Cela influe de manière négative sur les durées d'immobilisation des appareils de transport aérien, et donc sur leur rentabilité.

Dans le cas d'un dispositif d'articulation avec un tourillon monobloc, le coût de fabrication d'une telle pièce à fonctions multiples est assez élevé, du fait de sa structure complexe.

En outre, les sièges sont soumis à une utilisation intensive. Donc, des manipulations répétées des articulations de dossier et de tablette, provoquent des usures pouvant entraîner des jeux, voire des dysfonctionnements.

Enfin, il est connu que les sièges de véhicule aérien doivent répondre à des conditions drastiques de sécurité, de légèreté, d'encombrement et de résistance.

Ainsi, les moyens de blocage du dossier quand la tablette est en position de service, sont relativement lourds et volumineux, ce qui n'est pas souhaitable.

Le but de l'invention est de pallier ces inconvénients notamment. Elle propose un dispositif d'articulation pour siège :
- comportant un nombre limité de pièces constitutives, chacune de structure la plus simple possible ;
- d'encombrement, notamment transversal, et de poids limités, en comparaison avec les dispositifs connus ;
- permettant le montage/démontage rapide sans outils du dossier et de la tablette le cas échéant;
- apte à pour le moins limiter, voire annuler, les effets négatifs des usures de pièces; et
- rapprochant sensiblement la biellette d'actionnement de l'organe de commande de l'assise, de sorte qu'aucun raidisseur supplémentaire n'est nécessaire.

A cet effet, l'invention concerne un dispositif d'articulation destiné à une structure de siège de véhicule pour le transport aérien de passagers.

Ce dispositif est destiné à permettre le basculement d'une structure de dossier par rapport à une structure fixe correspondante du siège, ainsi qu'éventuellement le pivotement d'une tablette, autour d'un axe transversal de rotation.

En combinaison, ce dispositif comporte au moins :
- une douille transversale, essentiellement étendue sensiblement suivant l'axe de rotation, avec transversalement :
   * d'une part des moyens de maintien de la structure de dossier ; et
   * d'autre part une tête saillante destinée à être logée dans un organe complémentaire de la structure fixe sensiblement suivant une direction d'élévation, avec suivant cette direction au moins une zone inférieure de guidage et de rattrapage de jeu, et sensiblement à l'opposé en élévation de la zone de guidage, une zone supérieure de sollicitation avec rattrapage de jeu, apte à être plaquée contre l'organe complémentaire par des moyens d'agrafage élastique ou analogues, de la structure fixe.

Par ailleurs, l'organe complémentaire comporte un logement et des moyens d'agrafage élastiques ou analogues avec rattrapage de jeu, prévus pour plaquer les zones de guidage et de sollicitation de la tête de la douille contre au moins deux zones inférieures d'appui du logement, ces zones d'appui opposées définissant sensiblement une forme en "V" perpendiculairement à la direction transversale, évasée de bas en haut, respectivement vers l'avant et l'arrière.

Selon une autre caractéristique, le dispositif comprend un organe de transmission de commande de basculement de la structure de dossier, monté sur la douille sensiblement coaxialement à l'axe de rotation; et
- des moyens d'accouplement, destinés à rendre solidaires en rotation la structure de dossier et l'organe de transmission.

Ces moyens comportent un levier monté à rotation sur la douille sensiblement coaxialement à l'axe de rotation, avec un premier bras supérieur destiné à être rigidement fixé à la structure de dossier, radialement à distance de l'axe de rotation, tandis que l'autre dit second bras inférieur, est destiné à être rigidement fixé, radialement à distance de l'axe de rotation, à l'organe de transmission.

Dans un grand nombre de cas, des moyens de montage d'une tablette de service sont montés à rotation autour de la douille, et disposés entre la tête et les moyens de maintien de la structure de dossier, par exemple entre un organe de transmission et une bielle de moyens d'accouplement.

Par exemple, des moyens de montage de la tablette sont montés sur une molette à gorge, en matière synthétique et placée folle sur une surface externe de la douille, et/ou des moyens d'accouplement sont guidés sur un tube métallique rigidement fixé à la douille, par rivetage ou analogues, par exemple destiné à la liaison avec un autre dispositif d'articulation.

Dans un mode de réalisation, au moins une chemise de frottement qui guide les moyens d'accouplement est essentiellement constituée par un tube transversal métallique destiné à faire partie de la structure de dossier et/ou comporte un épaulement, tel qu'une extrémité libre externe transversalement, formant butée de positionnement transversal au sein du dispositif d'articulation.

Par exemple, au moins une patte des moyens de maintien de la structure de dossier, généralement en tôle et pourvue d'un trou traversant perpendiculaire à l'axe de rotation, est rigidement fixée sur un tube transversal métallique formant chemise de frottement, par soudage ou analogues, sensiblement perpendiculairement à l'axe de rotation.

Dans une réalisation, l'organe complémentaire comporte une pièce formant capot, par exemple en tôle emboutie, qui présente une section dans un plan d'élévation transversale en forme de "C" à concavité tournée vers la structure de siège, cette concavité définissant un espace pour le montage d'une pièce déformable élastiquement des moyens d'agrafage, ces deux pièces étant destinées à être positionnées et rigidement fixées conjointement par des moyens communs de montage sur une face interne de la structure fixe, tels que vis transversales.

Suivant une réalisation, la pièce déformable élastiquement, par exemple en lame de ressort, présente dans un plan d'élévation longitudinal une forme de oméga à concavité tournée vers le haut, cette concavité définissant intérieurement à proximité de la hampe de l'oméga, les zones d'appui, tandis qu'à proximité de l'extrémité de chaque branche de l'oméga, la pièce déformable définit les moyens d'agrafage sollicitant les zones supérieures de la tête.

Dans une autre réalisation, l'organe comporte une platine rigide d'espacement transversal destinée à être directement fixée sur la structure de siège, un masque rigide formant butée transversale, pourvu des zones d'appui du logement en "V" et monté sur la platine, ainsi que des moyens de sollicitation et de fermeture du logement, distincts de la platine et du masque.

Un mode de réalisation prévoit que les moyens de sollicitation et de fermeture du logement sont confondus.

Par exemple il sont en forme de lame de ressort généralement étendue longitudinalement, avec à une extrémité une circonvolution de pivotement dans un creux complémentaire de la platine d'espacement, une partie médiane élastique de pression sur la tête formant les moyens d'agrafage élastique, et une circonvolution d'ancrage par agrafage élastique sur un doigt saillant complémentaire de la platine d'espacement à l'extrémité opposée.

Encore un autre mode de réalisation prévoit que les moyens de sollicitation et de fermeture sont en partie distincts.

Ces moyens comprennent un élément élastiquement déformable de sollicitation tel que tige de ressort ou ressort en épingle, et un volet pivotant de fermeture de d'appui, monté pivotant autour d'un axe transversal sur le masque rigide et apte à enserrer et solliciter la tête de la douille, sous l'effet de l'élément déformable de sollicitation.

Un deuxième objet de l'invention est une structure de siège d'appareil de transport aérien en commun, notamment d'avion de ligne, pourvue d'au moins un tel dispositif d'articulation.

Par exemple, la structure de siège comporte deux de ces dispositifs, respectivement à l'une des extrémités transversales de l'axe de rotation, l'un avec un organe de transmission, l'autre sans.

Cette structure de siège comporte au moins un piétement fixe, une structure fixe d'assise, et une structure de dossier inclinable autour de l'axe de rotation.

La structure d'assise comporte transversalement de part et d'autre de la structure de siège, deux crosses longitudinales, chacune avec une extrémité libre arrière. L'axe de rotation est alors horizontal et passe par les extrémités libres arrière d'assise et celles des chants latéraux de dossier.

Dans une réalisation, la crosse comporte une embase d'assise, et rigidement fixée à cette embase, une prolongation d'élévation sur laquelle est rigidement fixée l'organe complémentaire.

La structure comporte dans nombre de structures de sièges, un dispositif de tablette de service escamotable destiné à être utilisé par le passager assis dans le prolongement et derrière la structure.

Un troisième objet de l'invention est un siège de véhicule aérien, équipé d'au moins un dispositif d'articulation et/ou d'une structure tels qu'évoqués.

Et un quatrième objet de l'invention est un véhicule de transport aérien pour passagers, équipé d'au moins un dispositif d'articulation et/ou d'une structure et/ou d'un siège tels qu'évoqués.

L'un des avantages de l'invention consiste dans la possibilité de pouvoir monter-démonter rapidement et sans outils le dossier de l'assise.

Un autre avantage consiste à pouvoir équiper totalement un dossier de ses habillages (mousse, housse) et tablette dorsale dans un atelier et d'interchanger en quelques secondes un dossier de siège sur avion.

Généralement, il faut déshabiller le dossier pour avoir accès à la boulonnerie pour assemblage/désassemblage.

Cela a pour effet une diminution des temps de maintenance et donc un gain de productivité pour l'appareil ainsi équipé.

Un but visé par l'invention est d'obtenir un démontage rapide, ainsi qu'un coût de fabrication compétitif.

L'invention est décrite en détail maintenant, en se reportant aux dessins annexés, donnés uniquement à titre d'exemple.

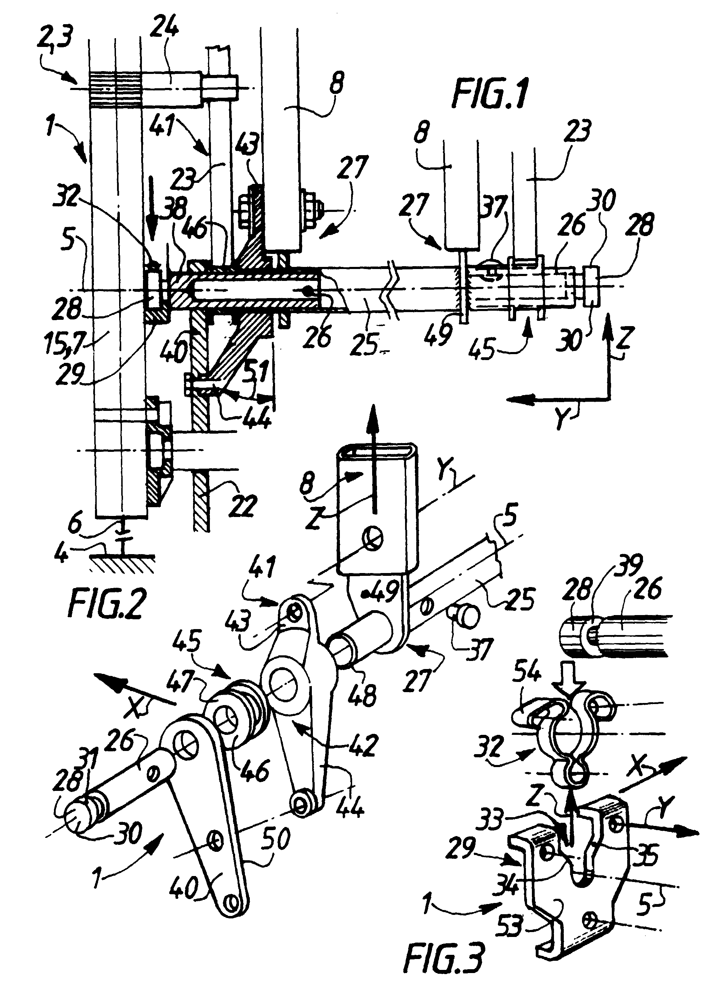

Dans les dessins, la figure 1 est une vue partielle d'élévation transversale, localement en coupe, d'un dispositif d'articulation, d'une structure de siège selon l'invention, sur laquelle le véhicule aérien est illustré schématiquement.

La figure 2 est une vue partielle en perspective d'élévation longitudinale et en éclaté, d'un dispositif d'articulation selon l'invention.

La figure 3 est une vue partielle en perspective d'élévation longitudinale en éclaté, qui illustre le montage d'un dispositif selon l'invention.

La figure 4 est une représentation en perspective d'une crosse monobloc de structure de siège conforme à l'invention, avec certains constituants du dispositif d'articulation.

La figure 5 est une vue d'élévation transversale suivant la flèche V de la figure 4.

La figure 6 est une vue d'élévation longitudinale d'un élément élastique de maintien du dispositif de l'invention.

La figure 7 est une vue d'élévation longitudinale d'une platine rigide de logement du dispositif selon l'invention.

La figure 8 est une vue schématique en perspective d'une chemise de guidage de chant de dossier, d'un dispositif selon l'invention.

La figure 9 est une vue d'élévation transversale d'un levier de liaison du dispositif d'articulation.

La figure 10 est une vue en perspective d'élévation longitudinale d'une embase de crosse de structure d'assise, et d'entretoises de montage d'une prolongation de crosse, selon un mode de réalisation de l'invention.

La figure 11 est une vue en élévation transversale de devant, d'une crosse comportant les embase, entretoises et prolongation de la figure 10, avec un organe complémentaire de dispositif d'articulation sur la face intérieure de cette prolongation.

La figure 12 est une vue d'élévation longitudinale d'un ressort en épingle de moyens d'agrafage d'un mode de réalisation de dispositif d'articulation.

La figure 13 est une vue d'élévation longitudinale d'un masque rigide d'organe complémentaire selon une réalisation de l'invention.

La figure 14 est une vue d'élévation longitudinale d'une platine rigide d'organe complémentaire selon une réalisation de l'invention.

La figure 15 est une vue d'élévation longitudinale d'un volet de fermeture et de sollicitation d'un organe complémentaire selon une réalisation de l'invention.

La figure 16 est une vue d'élévation transversale d'une structure de dossier de siège équipée de deux dispositifs d'articulation selon l'invention, à gauche sans moyens d'accouplement, à droite avec de tels moyens reliés à un organe de transmission, cette vue représentant aussi des moyens d'accrochage de garniture telle que dossier.

La figure 17 est une vue partielle d'élévation longitudinale de la structure de la figure 16, localement en coupe, sur laquelle est schématiquement représenté en trait discontinu une garniture ou coussin de dossier.

La figure 18 est une vue partielle en plan de la structure des figures 16 et 17.

La figure 19 est une vue d'élévation transversale en coupe d'une douille de tête réalisée à partir d'un profilé usiné.

La figure 20 est une vue d'élévation transversale d'une goupille de liaison de support de tablette à une structure de siège.

La figure 21 est une vue en perspective d'élévation longitudinale d'une bielle de transmission.

La figure 22 est une vue d'élévation longitudinale d'un levier d'accouplement.

La figure 23 est une vue d'une chemise en matière synthétique de guidage en rotation d'un support de tablette.

Sur les figures, sont représentées des directions mutuellement orthogonales X, Y et Z.

La direction X dite longitudinale, et la direction dite transversale, sont considérées sensiblement horizontales. Tandis que la direction Z dite d'élévation est considérée sensiblement verticale.

L'invention est décrite ici en se reportant à ces directions X, Y et Z.

Les constituants de l'invention sont décrits dans leurs positions et orientations courantes d'utilisation. Mais il va de soi qu'ils peuvent prendre diverses positions ou orientations. Tel est le cas notamment pour les constituants déplaçables ou mobiles. De même, les positions et orientations de stockage des constituants de l'invention peuvent être différentes. Ces positions et orientations sont donc indiquées uniquement à titre explicatif.

Il est précisé ici que les termes "avant" et "arrière" sont considérés suivant la direction longitudinale X, qui est considérée comme la direction principale de déplacement du véhicule.

Les termes "intérieur" et "extérieur" sont quant à eux considérés suivant la direction transversale Y.

Tandis que les termes "inférieur" et "supérieur" sont considérés suivant la direction d'élévation Z, respectivement comme indiquant un emplacement bas et haut.

Les termes "longitudinalement", "transversalement" et "d'élévation" se rapportent aux directions correspondantes X, Y et Z.

La référence 1 désigne de manière générale un dispositif d'articulation pour une structure 2 de siège.

Cette structure 2 est une armature, sur laquelle des garnitures telles que coussins et accessoires de confort ou esthétiques sont montés, pour obtenir un siège 3.

Ce siège 3 est lui même destiné à être monté dans un véhicule 4 de transport aérien, schématiquement représenté sur la figure 1. Classiquement, une siège 3 est rigidement fixé sur un plancher du véhicule 4, par l'intermédiaire de glissières non représentées.

La structure 2 du siège 3, notamment pour un avion de ligne, est pourvue d'au moins un dispositif d'articulation 1.

Dans les réalisations illustrées, la structure 2 comporte deux dispositifs 1, respectivement à l'une des extrémités transversales d'un axe de rotation 5. Dans le cas d'un siège 3 à plusieurs places, deux dispositifs 1 sont prévus pour chaque passager, en général.

Cette structure 2 de siège comporte au moins un piétement fixe 6, une structure fixe d'assise 7, et une structure de dossier 8, inclinable autour de l'axe de rotation 5.

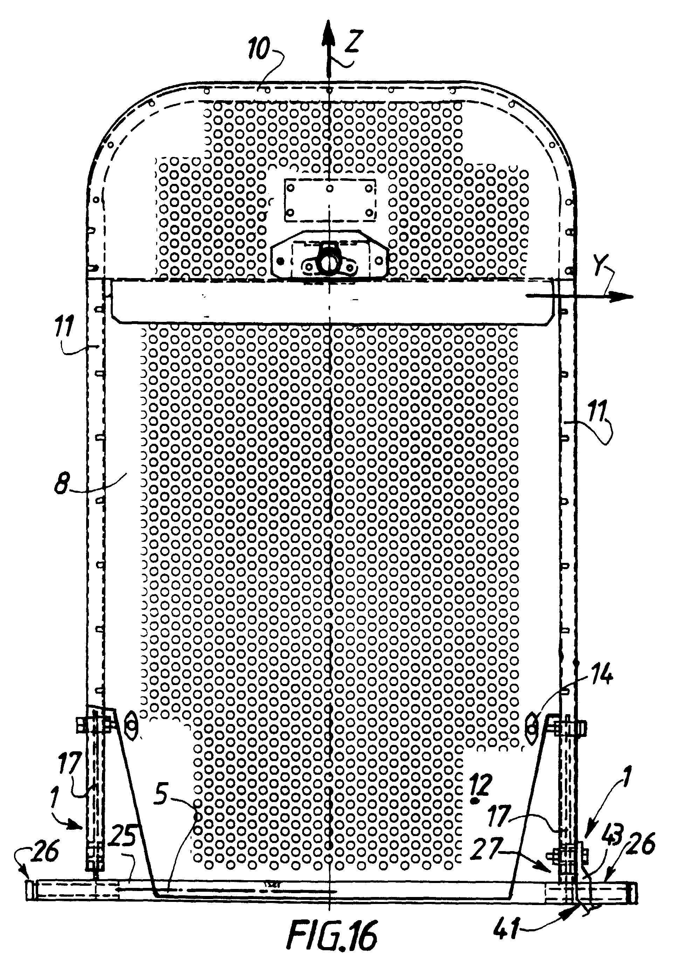

La structure 2 comprend sur la figure 16, un cadre 9 en forme générale en "U" dont l'âme transversale 10 forme le haut du dossier et les ailes 11 dans un plan d'élévation forment les chants latéraux du dossier.

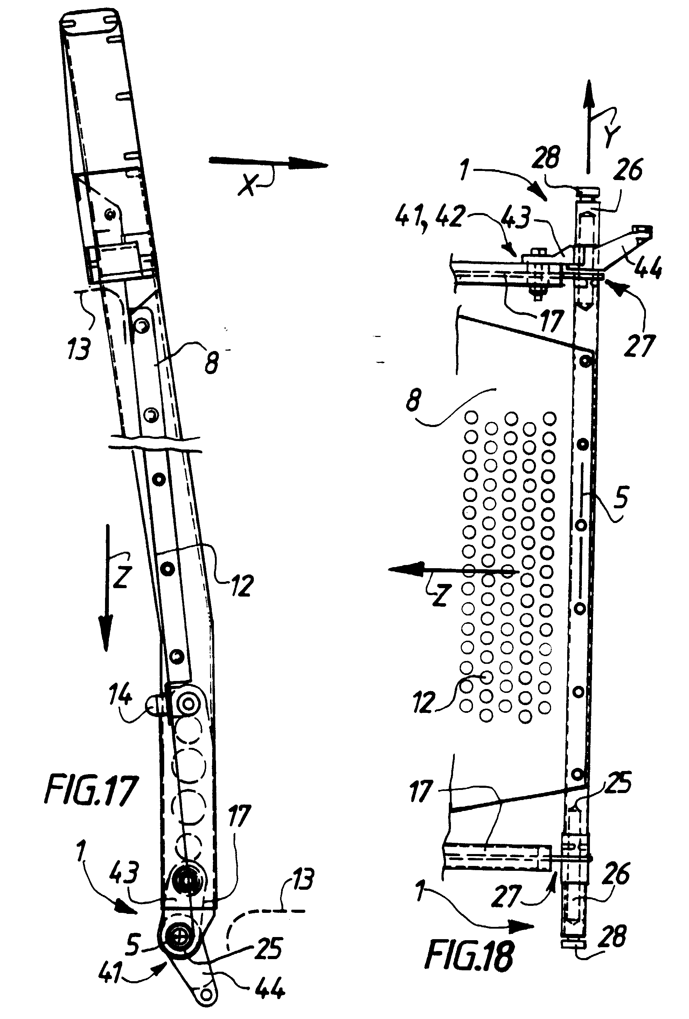

Une tôle 12 perforée est fixée sur le cadre, pour supporter des garnitures ou coussins 13, visibles sur la figure 17. Ces coussins 13 sont assemblés à la tôle 12 par des fixations rapides 14.

La structure d'assise 7 comporte également des tôle 12, coussins 1" et fixations 14.

Elle comporte transversalement de part et d'autre de la structure du siège 3, deux crosses 15 longitudinales, chacune avec une extrémité 16 libre arrière. Ces crosses 15 sont notamment visibles sur les figures 5, 10 et 11.

L'axe de rotation 5 est alors horizontal et passe au droit des extrémités 16 libres arrière d'assise et d'extrémités libres inférieures 17 (figure 16) des chants 11 latéraux de la structure 8 du dossier.

Chaque dispositif d'articulation 1 est d'une part associé rigidement et solidaire d'au moins une extrémité libre 17 de structure de dossier, et ici respectivement des deux, en saillie à l'extérieur et dans le prolongement de l'axe de rotation 5.

D'autre part, chaque dispositif d'articulation 1 est monté à rotation sur une face interne de la structure d'assise 7, et plus spécialement ici d'une crosse 15.

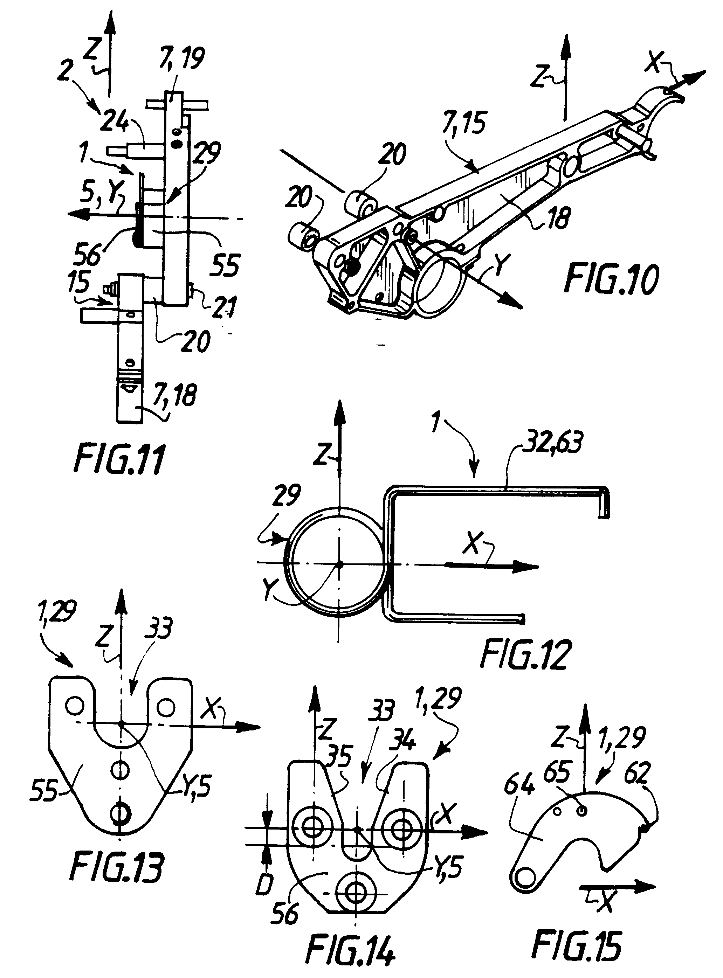

Dans la réalisation des figures 10 et 11, la crosse 15 comporte une embase 18 d'assise, et rigidement fixée à cette embase, une prolongation 19 d'élévation sur laquelle est rigidement fixée la partie statique du dispositif 1.

Cela permet d'utiliser une même embase 18 ou prolongation 19 pour diverses formes de structures de sièges 2 ou d'assise 7.

Sur la figure 11, la prolongation 19 est montée transversalement à l'extérieur de l'embase 18, par l'intermédiaire d'entretoises 20 et de vis 21. Tandis que le dispositif 1 est monté sur une face interne de cette prolongation 19.

Cela permet de compenser l'encombrement transversal de la partie statique du dispositif d'articulation 1, ainsi que de faciliter l'accès à ce dispositif, par exemple pour les montages/démontages.

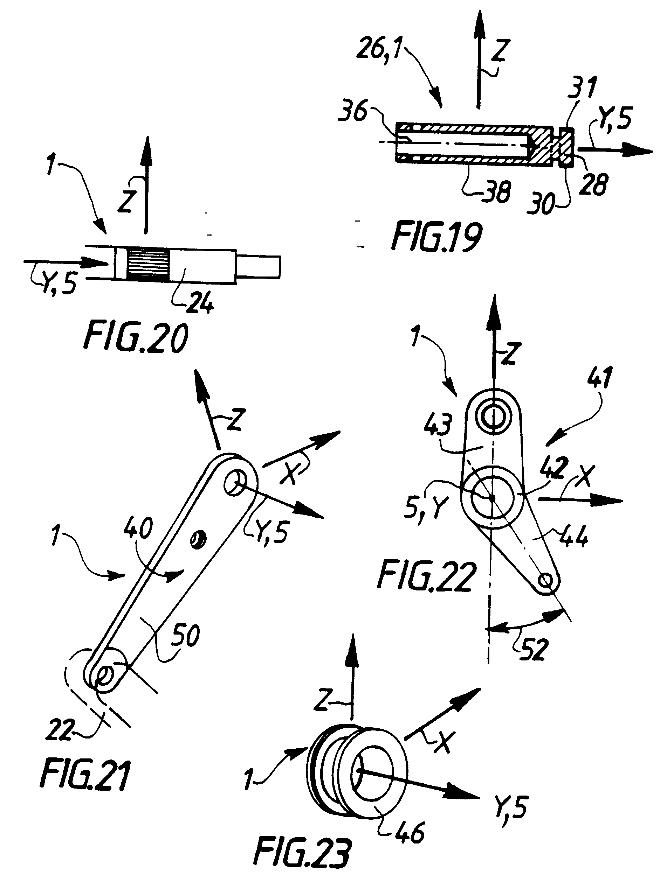

La structure 2 comporte en outre un organe 22 de commande d'inclinaison et de maintien en position du dossier, schématiquement illustré sur la figure 21.

Cet 22 organe est associé rigidement à l'assise et coopère via un organe du dispositif 1 avec le dossier, pour permettre son réglage de position et son maintien dans une position choisie par l'occupant du siège 3. Ici, l'un des dispositifs 1 est pourvu d'organe de transmission pour la commande, l'autre ne l'étant pas.

La structure 2 comporte dans nombre de structures de sièges 3, un dispositif de tablette de service escamotable destiné à être utilisé par le passager assis dans le prolongement et derrière la structure.

Seul un support 23 et une liaison 24 de ce dispositif de tablette de service est représenté sur la figure 1.

Par ailleurs, la structure 2, et plus particulièrement la structure de dossier 8, comprend à proximité ou à la base inférieure du dossier, un tube 25 transversal rejoignant les extrémités 17 du "U" du cadre de dossier.

Ce tube 25 reçoit à chacune de ses extrémités transversales extérieures un dispositif d'articulation 1 qui lui est rigidement fixé par rivetage ou analogue.

De manière similaire, la tôle 12 est rivetée sur le tube 25, comme cela ressort de la figure 18.

Egalement, le tube 25 forme à chacune de ses extrémités une chemise de frottement et/ou un support de fixation, par soudage ou analogues, pour le dispositif 1.

Selon une réalisation, ce tube 25 définit à chacune de ses extrémités transversales, une butée de positionnement transversal de moyens de ce dispositif 1.

Décrivons maintenant le dispositif d'articulation 1 destiné à la structure 2 d'un siège 3 de véhicule 4 de transport aérien de passagers.

Le dispositif 1 est destiné à permettre le basculement de la structure de dossier 8 par rapport à une structure fixe, ici d'assise 7, correspondante du siège 3.

Eventuellement, ce dispositif 1 perment le pivotement d'une tablette.

Ces basculement et pivotement sont effectués autour de l'axe transversal de rotation 5.

En combinaison, le dispositif 1 comporte au moins:
- une douille 26 transversale, essentiellement étendue sensiblement suivant l'axe de rotation 5, avec transversalement:
   * d'une part des moyens 37 de maintien de la structure 8 de dossier; et
   * d'autre part une tête 28 saillante destinée à être logée dans un organe complémentaire 29, destiné à être rigidement monté sur la structure fixe 7, sensiblement suivant une direction d'élévation E.

Suivant cette direction E, la tête 26 possède au moins une zone inférieure 30 de guidage et de rattrapage de jeu.

Sensiblement à l'opposé en élévation de la zone 30 de guidage, la tête 26 comporte une zone supérieure 31 de sollicitation avec rattrapage de jeu, apte à être plaquée contre l'organe complémentaire 29, par des moyens 32 d'agrafage élastique ou analogues, destinés à être montés sur la structure fixe 7.

Par ailleurs, l'organe complémentaire 29 comporte un logement 33 et les moyens 32 d'agrafage élastiques ou analogues avec rattrapage de jeu, prévus pour plaquer les zones de guidage 30 et de sollicitation 31 de la tête 28 contre au moins deux zones 34, 35 inférieures d'appui du logement.

Ces zones d'appui 34, 35 opposées définissent sensiblement une forme en "V" perpendiculairement à la direction transversale, évasée de bas en haut, respectivement vers l'avant et l'arrière.

Ainsi, lorsqu'une usure intervient, les zones 30 de la tête 28 de guidage "s'enfoncent" dans le V, en restant parfaitement guidées et la tête maintenue dans l'organe complémentaire fixe 29.

Comme cela ressort de la figure 14 où le "V" est particulièrement visible, cet enfoncement entraîne un léger déplacement D de l'axe 5 au fur et à mesure des usures. Un tel déplacement est agrandi sur cette figure, pour la compréhension.

Sur la figure 19 on voit bien que la douille transversale 26 est monobloc, et essentiellement constituée par un tronçon de profilé cylindrique, à section circulaire perpendiculairement à l'axe de rotation 5.

Ce tronçon est ensuite usiné et/ou mis en forme par emboutissage ou analogues. Il comporte un usinage 36 interne borgne transversal et débouchant à l'opposé de la tête 28.

Cette dernière est donc directement venue de matière avec le tronçon formant la douille 26. Ici, des perçages radiaux sont prévus sur la douille 26, pour le passage de moyens de maintien 37, visibles sur les figures 1 et 2.

On comprend au vu de la figure 1 que la douille 26 comporte au moins une surface périphérique externe transversale 38 formant palier de guidage.

Notamment, cet surface 38 est obtenue par usinage tel que tournage du tronçon de profilé plein cylindrique, et présente une section circulaire perpendiculairement à l'axe de rotation 5.

Dans l'exemple de la figure 1, la douille 26 comprend au moins deux surfaces juxtaposées sans discontinuité, de diamètre identique, et qui sont donc confondues.

On verra plus loin que ces surfaces permettent le guidage d'un organe de transmission et d'une chemise pour le montage du support de tablette.

Par ailleurs, la tête saillante 28 présente sur les figures une section transversale en forme de "T".

Le pied transversal de ce "T" est rigidement fixé à un corps de la douille, et ici venu de matière avec lui.

Tandis que la barre du "T", perpendiculaire à l'axe 5 est pourvue des zones 30, 31 de guidage et de sollicitation à rattrapage de jeu.

Cette barre est disposée à une extrémité libre de la douille 26, destinée à être placée en regard de l'intérieur de la structure 7 fixe.

Dans les exemples, cette tête 28 présente une section, transversalement à l'axe 5 de rotation ou basculement, à enveloppes circulaires, de manière à lui donner une forme générale de champignon, comme on le voit sur figure 2.

Ainsi, les zones 31 de sollicitation et de guidage assurent leurs fonctions liées au positionnement en élévation et à la rotation de la douille 26, tandis qu'une surface 39 (figure 3) perpendiculaire à l'axe 5 de la barre du "T", assure une fonction de positionnement transversal du dispositif d'articulation 1, par rapport à la structure 7 fixe.

Ici, les zones d'appui 30 et de sollicitation 31 font partie d'une même surface périphérique transversale de la tête 28, de forme sensiblement cylindrique et coaxiale à l'axe de rotation 5.

Comme indiqué plus haut, le dispositif 1 comprend un organe de transmission 40 relié par une articulation d'axe transversal à l'organe 22 de commande de basculement de la structure de dossier 8.

L'organe de transmission 40 est monté sur la douille 26 sensiblement coaxialement à l'axe de rotation 5.
Le dispositif 1 comprend aussi:
- des moyens d'accouplement 41, destinés à rendre solidaires en rotation la structure 8 de dossier et l'organe de transmission 40.

Ainsi, lorsqu'une commande de changement d'inclinaison du dossier est actionnée par l'occupant du siège 3, elle est transmise via les organes 22 et 40 puis des moyens 41, à la structure de dossier 8.

Les moyens 41 comportent ici un levier 42 monté à rotation sur la douille 26 sensiblement coaxialement à l'axe de rotation 5.

Le levier 42 possède un premier bras 43 supérieur destiné à être rigidement fixé à la structure 8, par des moyens de fixation, ici une vis transversale et son écrou.

Cette fixation est disposée radialement à distance de l'axe de rotation 5.

L'autre bras 44, dit second bras inférieur, est destiné à être rigidement fixé, radialement à distance de l'axe de rotation 5, à l'organe 40 de transmission. Cette fixation est ici une vis transversale montée dans un taraudage du bras 44.

Du fait que les moyens d'accouplement 41 et l'organe de transmission 40 sont coaxiaux et proches au sein du dispositif 1, les couples de fonctionnement sont limités, ce qui permet d'obtenir une articulation à la fois légère et mécaniquement résistante.

Dans le cas des figures, des moyens 45 de montage d'une tablette de service sont montés autour de la douille 26. Ces moyens comprennent le support de tablette 23.

Les moyens de montage 45 sont transversalement disposés entre la tête 28 et les moyens de maintien 37 de la structure de dossier, plus précisément entre l'organe de transmission 40 et le levier ou bielle 42 des moyens d'accouplement 41.

On comprend déjà qu'en montant autour de la douille 26, les moyens de maintien 37 et les moyens de montage 45, il n'est plus nécessaire de prévoir une structure supplémentaire d'ajustement de la position de la tablette déployée en fonction de la position de la structure de dossier 8.

En effet, le dossier peut alors être basculé autour de l'axe 5 commun de rotation, sans que cela ne modifie la position de la tablette. En quelque sorte, la fonction dossier est ici supprimée.

Sur les figures, les moyens d'accouplement 41 et de montage 45 de la tablette sont montés sur l'axe de rotation 5, par l'intermédiaire de chemises de frottement, montées sur la surface externe 38 de la douille 26.

Une chemise 46 des moyens de montage 45 de la tablette, est une molette. Il ressort de la figure 8 ou 23, que la molette 46 est à gorge, en matière synthétique et placée folle sur une surface externe 38.

Une autre chemise est le tube métallique 25, et fait partie des moyens de maintien 37. La surface extérieure de la chemise formée par le tube 25 sert au guidage en rotation du levier 42 des moyens d'accouplement 41. Ce tube métallique 25 est rigidement fixé à la douille, par rivetage ou analogues, et destiné par ailleurs à la liaison avec un autre dispositif d'articulation 1.

Dans les réalisations illustrées, les chemises 25, 46 de frottement comportent au moins un épaulement, respectivement 47, 48 tel qu'une extrémité libre externe transversalement, formant butée de positionnement transversal au sein du dispositif d'articulation 1.

En fait, la molette 46 possède deux épaulements de part et d'autre transversalement, l'un extérieur formant butée pour l'organe 40 et l'autre intérieur pour le levier 42.

L'épaulement extérieur 48 du tube formant chemise 25 sert de butée pour la molette 46, et définit ainsi la position transversale de son épaulement intérieur contre lequel le levier 42 est en butée.

Les figures 1 et 2 montrent qu'une patte 49 des moyens de maintien 37 de la structure 8 de dossier, est généralement en tôle. Elle est pourvue d'un trou traversant perpendiculaire à l'axe de rotation 5, à travers lequel est passé la vis de fixation du bras 43 à la structure 8.

La patte 49 est rigidement fixée sur le tube transversal 25 métallique formant chemise de frottement, par soudage ou analogues, sensiblement perpendiculairement à l'axe de rotation 5.

Les moyens de maintien 37 comportent outre les moyens déjà évoqués de fixation rigide à la douille 26 sensiblement coaxialement, au tube 25 de jonction, d'autres moyens sensiblement dans un plan perpendiculaire à l'axe de rotation 5, reliant la douille 26 à un cadre de la structure de dossier 8. Il s'agit de la patte 49 et de sa soudure sur le tube 25.

On comprend donc que les moyens de maintien 37 et d'accouplement 41 sont au moins en partie confondus.

Plus précisément, les moyens de maintien 37 comportent la patte 49 rigidement fixée à la douille 26 ainsi que destinée à l'être à la structure 8, tandis que les moyens d'accouplement 41 comportent le premier bras supérieur 43 du levier 42 auquel la structure 8 est destinée à être rigidement fixée, par vissage.

Ainsi, le bras supérieur 43 participe à la résistance mécanique du maintien de la structure de dossier 8. Cela permet d'obtenir une excellente rigidité, tout en limitant le poids et l'encombrement du dispositif.

Par ailleurs, l'organe de transmission 40 de commande de basculement, comporte essentiellement une bielle (figure 21) montée folle en rotation sur la douille 26 et dont une extrémité libre, radialement à distance de l'axe de basculement 5, est destinée à être rigidement fixée au second bras inférieur 44 de levier des moyens d'accouplement 41.

Ici, la bielle 40 est obtenue à partir d'un plat de tôle ou analogues, et présente une face interne sensiblement perpendiculaire à l'axe de basculement 5 et formant butée transversale de positionnement, pour des moyens d'accouplement 41 via la molette 46 des moyens de montage 45 de la tablette.

Les différentes face 50 ou épaulements 47, 48 butées forment, en servant de butées, une chaîne de cotes qui assure de manière simple et peu coûteuse, un positionnement transversal relatif et précis des principaux constituants du dispositif 1.

En effet, les moyens d'accouplement, les moyens de montage de la tablette et l'organe de transmission sont transversalement en butée deux-à-deux, depuis l'intérieur vers l'extérieur du dispositif d'articulation 1.

On retrouve ici les avantages d'un tourillon monobloc, sans ses inconvénients pécuniaires, notamment.

Sur les figures 1, 9 et 22, on voit que le premier bras 43 des moyens d'accouplement, est généralement étendu suivant une direction perpendiculaire à l'axe de basculement 5, notamment suivant une direction d'élévation, de bas en haut.

Tandis que le second bras 44 est généralement étendu par rapport à un plan perpendiculaire à l'axe de basculement 5, de haut en bas depuis l'intérieur vers l'extérieur du dispositif d'articulation 1 transversalement, suivant un angle 51 compris entre 20° et 60°, et notamment de l'ordre de 40°.

Cela permet notamment de ménager un espace pour le dégagement vers l'extérieur du support 23 de tablette, pour son démontage.

Le second bras 44 est aussi généralement étendu par rapport à un plan parallèle d'une part à l'axe de basculement 5 et d'autre part la direction d'élévation E, de haut en bas depuis l'arrière vers l'avant du dispositif d'articulation 1 longitudinalement, suivant un angle 52 compris entre 20° et 60°, et notamment de l'ordre de 40°.

Cela permet d'obtenir un accouplement rigide et sans pièce intermédiaire, en réduisant la distance entre ce bras 44 et l'organe 22 de commande.

Ces angles 51, 52 visent aussi à réduire l'encombrement du dispositif d'articulation 1, suivant les directions longitudinales L et transversales T, respectivement.

Dans la réalisation de la figure 3, l'organe complémentaire 29 comporte une pièce formant capot 53 en tôle emboutie, qui présente une section dans un plan d'élévation transversale en forme de "C" à concavité tournée vers la structure fixe 7.

Cette concavité définit un espace pour le montage d'une pièce déformable élastiquement 54 des moyens d'agrafage 32.

Les deux pièces 53, 54 sont destinées à être positionnées et rigidement fixées conjointement par des moyens communs de montage sur une face interne de la structure fixe 7, tels que vis transversales.

Evidemment, cette fixation autorise les déformations nécessaires à la fonction d'agrafage et de rattrapage de jeu exercée par la pièce 54.

Suivant cette réalisation, la pièce déformable élastiquement 54, ici en lame de ressort, présente dans un plan d'élévation longitudinal une forme de oméga à concavité tournée vers le haut. Cette concavité définit intérieurement à proximité de la hampe de l'oméga, des zones d'appui, tandis qu'à proximité de l'extrémité de chaque branche de l'oméga, la pièce déformable définit les moyens d'agrafage sollicitant les zones supérieures de la tête 28.

Ici, la hampe du oméga définit avec les zones 34, 35 le "V" de rattrapage de jeu.

Trois crochets de montage de la pièce déformable élastiquement 54 sont formés par des circonvolutions ouvertes de l'oméga.

L'un est un crochet central qui saille en élévation vers le bas au milieu de la hampe longitudinalement, et deux autres sont des crochets avant et arrière qui saillent longitudinalement de chaque base du oméga, de manière à permettre chacun le passage d'une vis de montage transversale. Des perçages correspondants sont prévus pour le passage de ces vis dans le capot 53.

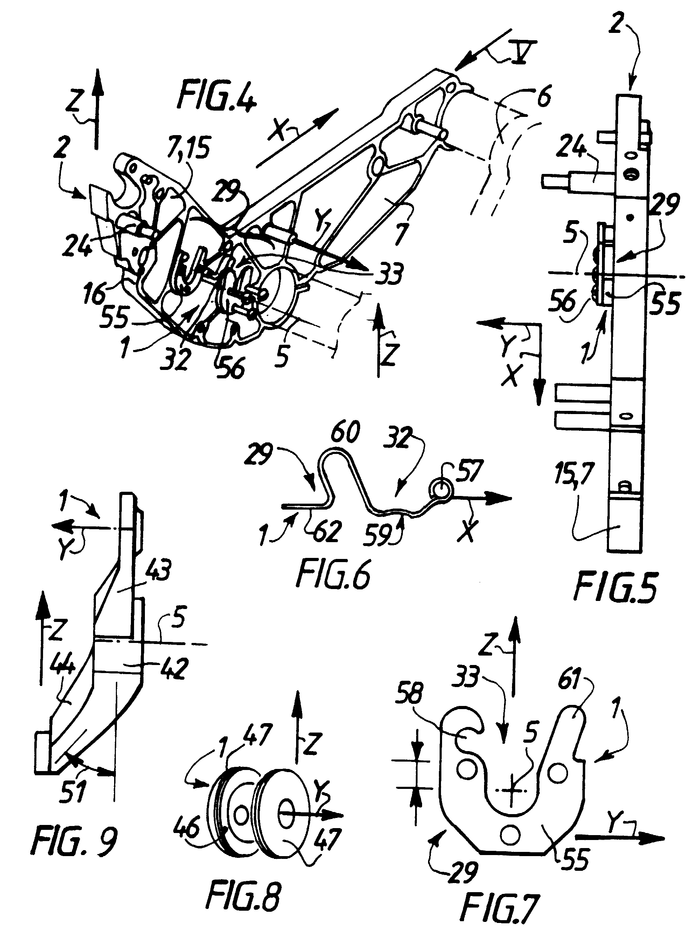

Dans la réalisation des figures 4 à 15, l'organe complémentaire 29 comporte une platine rigide 55 d'espacement transversal. Cette platine 55 est destinée à être directement fixée sur la structure fixe 7 du siège.
Un masque rigide 56 formant butée transversale, est pourvu des zones d'appui 34, 35 du logement en "V" et est monté sur la platine 55.

Des moyens de sollicitation et de fermeture du logement 33, sont ici distincts de la platine 55 et du masque 56.

Dans le mode de réalisation des figures 4 à 7, les moyens de sollicitation et de fermeture du logement sont confondus.

Il s'agit des moyens d'agrafage 32.

Ces moyens 32 ont, comme sur la figure 6, la forme d'une lame de ressort généralement étendue longitudinalement, avec à une extrémité une circonvolution 57 de pivotement dans un creux 58 complémentaire de la platine d'espacement 55.

Une partie médiane 59 élastique de pression sur la tête 28 forme les moyens d'agrafage élastique 32 proprement dits.

Une autre circonvolution 60 d'ancrage permet l'agrafage élastique du ressort sur un doigt 61 saillant complémentaire de la platine d'espacement 55, à l'extrémité opposée.

On remarque aussi une languette 62 de prise du ressort, qui permet le désengagement de la circonvolution 60 hors du doigt 61, pour libérer la douille 26 après pivotement de la circonvolution 57 dans le creux 58.

Evidemment, cette languette 62 facilite aussi l'engagement sous pression de la circonvolution 60 sur le doigt 61, au montage.

Dans un autre mode de réalisation des figures 11 à 15, les moyens de sollicitation et de fermeture sont en partie distincts.

Ces moyens comprennent un élément élastiquement déformable 63 de sollicitation, ici une tige de ressort ou ressort en épingle, et un volet pivotant 64 de fermeture de d'appui, monté pivotant autour d'un axe transversal sur le masque rigide 56 et apte à enserrer et solliciter la tête 28 de la douille, sous l'effet de l'élément 63 déformable de sollicitation.

A cette fin, le volet 64 est pourvu d'un trou 65 pour le passage d'une extrémité de l'épingle 63. Une autre extrémité du ressort est logée dans un trou complémentaire de la platine 55 ou du masque 56.

Le volet 64 possède aussi une languette de manipulation 62.

On comprend maintenant que les caractéristiques de l'invention permettent de pallier les problèmes des techniques connues.

Dans les modes de réalisation représentés de l'invention, le dossier du siège 1 peut être placé dans quatre positions à savoir :
- la position d'association ou position de montage-démontage dans laquelle le dossier est rabattu vers l'assise de telle sorte que le plan du dossier et l'horizontale forment un angle compris dans une fourchette de 25 à 35°, notamment 32,5°;
- une position de "break-over", correspondant à une position de service en cas d'accident, le dossier étant rabattu en avant vers l'assise et formant un angle d'environ 70° avec l'horizontale;
- la position assise, position de service dans laquelle le passager est assis, qui est déclinable suivant l'inclinaison de dossier choisie par le passager ; et
- la position allongée, position de service dans laquelle le passager est légèrement allongé.

## Revendications

1. Dispositif (1) d'articulation destiné à une structure de siège (2) de véhicule (4) pour le transport aérien de passagers, destiné à permettre le basculement d'une structure de dossier (8) par rapport à une structure fixe (7) correspondante du siège (3), ainsi qu'éventuellement le pivotement d'une tablette, autour d'un axe transversal de rotation (5); caractérisé en ce qu'en combinaison, ce dispositif (1) comporte au moins une douille (26) transversale, essentiellement étendue sensiblement suivant l'axe de rotation (5), avec transversalement: d'une part des moyens de maintien (37) de la structure de dossier (8); et d'autre part une tête (28) saillante destinée à être logée dans un organe complémentaire (29) de la structure fixe (7) sensiblement suivant une direction d'élévation (Z), avec suivant cette direction (Z) au moins une zone inférieure (30) de guidage et de rattrapage de jeu, et sensiblement à l'opposé en élévation de la zone de guidage, une zone supérieure (31) de sollicitation avec rattrapage de jeu, apte à être plaquée contre l'organe complémentaire (29) par des moyens d'agrafage élastique (32) ou analogues, de la structure fixe (7).

2. Dispositif (1) selon la revendication 1, caractérisé en ce que l'organe complémentaire (29) comporte un logement (33) et des moyens d'agrafage (32) élastiques ou analogues avec rattrapage de jeu, prévus pour plaquer les zones de guidage ou d'appui (30) et de sollicitation (31) de la tête (28) de la douille (26) contre au moins deux zones inférieures d'appui (34, 35) du logement (33), ces zones d'appui (34, 35) opposées définissant sensiblement une forme en "V" perpendiculairement à la direction transversale (T), évasée de bas en haut, respectivement vers l'avant et l'arrière.

3. Dispositif (1) selon la revendication 1 ou 2, caractérisé en ce que la douille (26) transversale est monobloc, et essentiellement constituée par un tronçon de profilé cylindrique, à section circulaire perpendiculairement à l'axe de basculement (5), et usiné et/ou mis en forme par emboutissage ou analogues, par exemple, le tronçon comporte un usinage (36) interne borgne transversal et débouchant à l'opposé de la tête (28), cette dernière étant directement venue de matière avec le tronçon.

4. Dispositif (1) selon l'une des revendications 1 à 3, caractérisé en ce que la douille (26) transversale comporte au moins une surface périphérique externe (38) transversale formant palier de guidage, notamment obtenue par usinage tel que tournage d'un tronçon de profilé plein cylindrique, à section circulaire perpendiculairement à l'axe de rotation (5), par exemple, la douille (26) comprend au moins deux surfaces juxtaposées sans discontinuité, et donc de diamètre identique.

5. Dispositif (1) selon l'une des revendications 1 à 4, caractérisé en ce que la tête (28) saillante de guidage de la douille (26) présente une section transversale en forme de "T", dont le pied est rigidement fixé à un corps de la douille (26), tandis que la barre du "T", pourvue des zones de guidage (30) et de sollicitation (31) à rattrapage de jeu, est disposée à une extrémité libre de la douille (26), destinée à être placée en regard de l'intérieur de la structure fixe (7), par exemple, cette tête (28) présente une section transversalement à l'axe de basculement, à enveloppes circulaires, de manière à donner à cette tête (28) une forme générale de champignon.

6. Dispositif (1) selon l'une des revendications 1 à 5, caractérisé en ce que les zones (30, 31) de guidage et de sollicitation font partie d'une même surface de la tête (28), par exemple de forme sensiblement cylindrique et coaxiale à l'axe de rotation (5).

7. Dispositif (1) selon l'une des revendications 1 à 6, caractérisé en ce que le dispositif (1) comprend un organe de transmission (40) de commande de basculement de la structure de dossier (8), monté sur la douille (26) sensiblement coaxialement à l'axe de rotation (5); et des moyens d'accouplement (41), destinés à rendre solidaires en rotation la structure de dossier (8) et l'organe de transmission (40), ces moyens comportant un levier (42) monté à rotation sur la douille (26) sensiblement coaxialement à l'axe de rotation (5), avec un premier bras (43) supérieur destiné à être rigidement fixé à la structure de dossier (8), radialement à distance de l'axe de rotation (5), tandis que l'autre dit second bras (44) inférieur, est destiné à être rigidement fixé, radialement à distance de l'axe de rotation (5), à l'organe de transmission (40).

8. Dispositif (1) selon l'une des revendications 1 à 7, caractérisé en ce que des moyens de montage (45) d'une tablette de service sont montés autour de la douille (26), et disposés entre la tête (28) et les moyens de maintien (37) de la structure de dossier (8), par exemple entre un organe de transmission (40) et un levier (42) de moyens d'accouplement (41).

9. Dispositif (1) selon l'une des revendications 1 à 8, caractérisé en ce que des moyens d'accouplement (41) et/ou de montage d'une tablette (45) sont montés sensiblement sur l'axe de rotation (5), par l'intermédiaire d'au moins une chemise (46, 25) de frottement montée sur une surface externe de la douille (26), telle que molette (46) en matière synthétique et/ou tube métallique (25), par exemple, des moyens de montage de la tablette sont montés sur une molette à gorge, en matière synthétique et placée folle sur une surface externe de la douille (26) et/ou des moyens d'accouplement sont guidés sur un tube métallique rigidement fixé à la douille (26), par rivetage ou analogues, par exemple destiné à la liaison avec un autre dispositif (1) d'articulation.

10. Dispositif (1) selon la revendication 9, caractérisé en ce qu'au moins une chemise de frottement qui guide les moyens d'accouplement (41) est essentiellement constituée par un tube (25) transversal métallique destiné à faire partie de la structure de dossier (8) et/ou comporte un épaulement (47, 48), tel qu'une extrémité libre externe transversalement, formant butée de positionnement transversal au sein du dispositif (1) d'articulation, par exemple, au moins une patte (49) des moyens de maintien (37) de la structure de dossier (8), généralement en tôle et pourvue d'un trou traversant perpendiculaire à l'axe de rotation (5), est rigidement fixée sur un tube (25) transversal métallique formant chemise de frottement, par soudage ou analogues, sensiblement perpendiculairement à l'axe de rotation (5).

11. Dispositif (1) selon l'une des revendications 1 à 10, caractérisé en ce que les moyens de maintien (37) de structure de dossier (8) comportent des moyens de fixation rigide à la douille (26) d'une part sensiblement coaxialement, à un tube de jonction (25) destiné à relier cette douille (26) à un autre dispositif (1) d'articulation transversalement opposé suivant l'axe de rotation (5), et d'autre part sensiblement dans un plan perpendiculaire à l'axe de rotation (5), à un cadre de la structure de dossier (8).

12. Dispositif (1) selon l'une des revendications 1 à 11, caractérisé en ce que les moyens de maintien (37) et d'accouplement sont au moins en partie confondus, par exemple les moyens de maintien (37) comportent une patte (49) rigidement fixée à la douille (26) ainsi que destinée à l'être à la structure de dossier (8), tandis que les moyens d'accouplement (41) comportent un premier bras supérieur (43) de levier auquel la structure de dossier (8) est destinée à être rigidement fixée, par vissage ou analogues.

13. Dispositif (1) selon l'une des revendications 7 à 12, caractérisé en ce que l'organe de transmission (40) de commande de basculement, comporte essentiellement une bielle montée folle en rotation sur la douille (26) et dont une extrémité libre, radialement à distance de l'axe de basculement (5), est destinée à être rigidement fixée à un second bras inférieur (44) de levier des moyens d'accouplement (41), par exemple, la bielle obtenue à partir d'un plat de tôle ou analogues, présente une face sensiblement perpendiculaire à l'axe (5) et formant butée transversale de positionnement, pour des moyens d'accouplement (41) et/ou des moyens de montage (45) d'une tablette.

14. Dispositif (1) selon l'une des revendications 7 à 13, caractérisé en ce que le premier bras (43) de levier des moyens d'accouplement, destiné à être rigidement fixé à la structure de dossier (8) est généralement étendu suivant une direction perpendiculaire à l'axe de basculement (5), notamment suivant une direction d'élévation (Z), de bas en haut, tandis que le second bras (44) de la bielle destiné à être rigidement fixé sur l'organe de transmission, est généralement étendu par rapport à un plan perpendiculaire à l'axe de basculement, de haut en bas depuis l'intérieur vers l'extérieur du dispositif (1) d'articulation transversalement, suivant un angle (51) compris entre 20° et 60°, et notamment de l'ordre de 40°.

15. Dispositif (1) selon l'une des revendications 7 à 14, caractérisé en ce que le second bras (44) de la bielle des moyens d'accouplement, est généralement étendu par rapport à un plan parallèle d'une part à l'axe de basculement et d'autre part une direction d'élévation, de haut en bas depuis l'arrière vers l'avant du dispositif (1) d'articulation longitudinalement, suivant un angle (52) compris entre 20° et 60°, et notamment de l'ordre de 40°.

16. Dispositif (1) selon l'une des revendications 7 à 15, caractérisé en ce que les moyens d'accouplement (41), les moyens de montage (45) d'une tablette et l'organe de transmission (40) sont transversalement en butée deux-à-deux, depuis l'intérieur vers l'extérieur du dispositif (1) d'articulation.

17. Dispositif (1) selon l'une des revendications 1 à 16, caractérisé en ce que l'organe complémentaire (29) comporte une pièce formant capot (53), par exemple en tôle emboutie, qui présente une section dans un plan d'élévation transversale en forme de "C" à concavité tournée vers la structure de siège (2), cette concavité définissant un espace pour le montage d'une pièce déformable (54) élastiquement des moyens d'agrafage, ces deux pièces (53, 54) étant destinées à être positionnées et rigidement fixées conjointement par des moyens communs de montage sur une face interne de la structure fixe (7), tels que vis transversales.

18. Dispositif (1) selon la revendication 17, caractérisé en ce que la pièce (54) déformable élastiquement, par exemple en lame de ressort, présente dans un plan d'élévation longitudinal une forme de oméga à concavité tournée vers le haut, cette concavité définissant intérieurement à proximité de la hampe de l'oméga, les zones d'appui, tandis qu'à proximité de l'extrémité de chaque branche de l'oméga, la pièce déformable définit les moyens d'agrafage sollicitant les zones supérieures (31) de la tête (28), par exemple au moins deux crochets de montage de la pièce déformable (54) élastiquement sont formés par des circonvolutions ouvertes de l'oméga, un crochet central saillant en élévation vers le bas au milieu de la hampe longitudinalement, et deux crochets avant et arrière saillent longitudinalement de chaque base du oméga, de manière à permettre chacun le passage d'une vis de montage transversale.

19. Dispositif (1) selon l'une des revendications 1 à 18, caractérisé en ce que l'organe complémentaire (29) comporte une platine rigide (55) d'espacement transversal destinée à être directement fixée sur la structure fixe (7) du siège (3), un masque rigide (56) formant butée transversale, pourvu des zones d'appui du logement en "V" et monté sur la platine, ainsi que des moyens de sollicitation et de fermeture du logement, distincts de la platine et du masque.

20. Dispositif (1) selon la revendication 19, caractérisé en ce que les moyens de sollicitation (32) et de fermeture du logement sont confondus, par exemple ils ont la forme d'une lame de ressort généralement étendue longitudinalement, avec à une extrémité une circonvolution (57) de pivotement dans un creux (58) complémentaire de la platine d'espacement (55), une partie médiane (59) élastique de pression sur la tête (28) formant les moyens d'agrafage élastique, et une circonvolution (60) d'ancrage par agrafage élastique sur un doigt saillant (61) complémentaire de la platine (55) d'espacement à l'extrémité opposée.

21. Dispositif (1) selon la revendication 19, caractérisé en ce que les moyens de sollicitation et de fermeture sont en partie distincts, ces moyens comprenant un élément élastiquement (63) déformable de sollicitation tel que tige de ressort ou ressort en épingle, et un volet (64) pivotant de fermeture et d'appui, monté pivotant autour d'un axe transversal sur le masque rigide (56) et apte à enserrer et solliciter la tête (28) de la douille (26), sous l'effet de l'élément déformable de sollicitation (63).

22. Structure de siège (2) d'appareil de transport aérien en commun, notamment d'avion de ligne, caractérisé en ce qu'elle (2) est pourvue d'au moins un dispositif (1) d'articulation selon l'une des revendications 1 à 21, par exemple cette structure de siège (2) comporte deux de ces dispositifs, respectivement à l'une des extrémités transversales de l'axe de rotation (5), l'un avec un organe de transmission, l'autre sans.

23. Structure de siège (2) selon la revendication 22, caractérisée en ce qu'elle (2) comporte au moins un piétement (6) fixe, une structure fixe (7) d'assise, et une structure de dossier (8) inclinable autour de l'axe de rotation (5).

24. Structure de siège (2) selon la revendication 22 ou 23, caractérisée en ce que la structure de dossier (8) comprend un cadre en forme générale en "U" dont l'âme (10) forme le haut du dossier et les ailes forment les chants latéraux (11) du dossier.

25. Structure de siège (2) selon l'une des revendications 23 à 24, caractérisée en ce que la structure d'assise (7) comporte transversalement de part et d'autre de la structure de siège (2), deux crosses longitudinales, chacune avec une extrémité libre arrière, l'axe de rotation (5) étant alors horizontal et passant par les extrémités libres arrière d'assise (16) et celles (17) des chants (11) latéraux de dossier.

26. Structure de siège (2) selon l'une des revendications 22 à 25, caractérisée en ce qu'un dispositif (1) d'articulation est d'une part associé rigidement et solidaire d'au moins une extrémité libre d'une structure de dossier (8), et par exemple à deux, en saillie à l'extérieur et dans le prolongement de l'axe de rotation (5), d'autre part, au moins un dispositif (1) d'articulation est monté à rotation, par exemple par l'intermédiaire d'un organe complémentaire (29), sur une face interne d'une structure d'assise (7), par exemple une crosse (15).

27. Structure de siège (2) selon l'une des revendications 22 à 26, caractérisée en ce qu'une structure d'assise (7) est pourvue d'au moins une crosse (15), et par exemple de deux, qui comporte une embase d'assise (18), et rigidement fixée à cette embase, une prolongation (19) d'élévation sur laquelle est rigidement fixée l'organe complémentaire (29), par exemple, l'organe complémentaire (29) est monté sur une face interne de cette prolongation (19).

28. Structure de siège (2) selon l'une des revendications 22 à 27, caractérisée en ce qu'elle (2) comporte en outre un organe de commande (22) et de maintien en position du dossier, cet organe étant par exemple associé rigidement à une structure d'assise (7) et coopérant via un organe de transmission (40) avec une structure de dossier (8), pour permettre son réglage de position et son maintien en position.

29. Structure de siège (2) selon l'une des revendications 22 à 28, caractérisée en ce qu'elle (2) comporte une de tablette de service escamotable destiné à être utilisé par le passager assis dans le prolongement et derrière la structure (2).

30. Siège (3) de véhicule (4) aérien, caractérisé en ce qu'il (3) est équipé d'au moins un dispositif (1) d'articulation selon l'une des revendications 1 à 21 et/ou d'une structure (2) selon l'une des revendications 1 à 29.

31. Véhicule (4) de transport aérien pour passagers, caractérisé en ce qu'il (4) est équipé d'au moins un dispositif (1) d'articulation selon l'une des revendications 1 à 21 et/ou d'une structure selon l'une des revendications 1 à 29 et/ou d'un siège (3) selon la revendication 30.
